(19) Europäisches Patentamt
European Patent Office
Office européen des brevets

(11) **EP 4 583 184 A1**

(12) **EUROPEAN PATENT APPLICATION**

(43) Date of publication:
**09.07.2025 Bulletin 2025/28**

(21) Application number: **24220081.4**

(22) Date of filing: **16.12.2024**

(51) International Patent Classification (IPC):
**H01M 4/13** (2010.01)  **H01M 4/36** (2006.01)
**H01M 4/62** (2006.01)  **H01M 10/0525** (2010.01)
**H01M 4/38** (2006.01)  **H01M 4/587** (2010.01)

(52) Cooperative Patent Classification (CPC):
**H01M 4/13; H01M 4/366; H01M 4/622;
H01M 10/0525;** H01M 4/364; H01M 4/386;
H01M 4/587

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.01.2024 KR 20240002659**

(71) Applicant: **SAMSUNG SDI CO., LTD.
Yongin-si, Gyeonggi-do 17084 (KR)**

(72) Inventors:
• **PARK, Jin Seok
Gyeonggi-do 17084 (KR)**

• **NAM, Hyun
Gyeonggi-do 17084 (KR)**
• **LEE, Taeil
Gyeonggi-do 17084 (KR)**
• **KIM, Jaehong
Gyeonggi-do 17084 (KR)**
• **SEO, Sungjin
Gyeonggi-do 17084 (KR)**

(74) Representative: **Michalski Hüttermann & Partner
Patentanwälte mbB
Kaistraße 16A
40221 Düsseldorf (DE)**

(54) **ELECTRODE FOR RECHARGEABLE LITHIUM BATTERY AND RECHARGEABLE LITHIUM BATTERY INCLUDING THE SAME**

(57) Electrodes and rechargeable lithium batteries including the same are provided. The electrode comprises a current collector, and a multiple active material layer on the current collector. The multiple active material layer includes a first electrode mixture layer on the current collector, a second electrode mixture layer on the first electrode mixture layer, and a third electrode mixture layer on the second electrode mixture layer. Each of the first, second, and third electrode mixture layers includes an electrode active material and a binder. The first, second, and third electrode mixture layers have different binder amounts. A first thickness of the first electrode mixture layer is less than a second thickness of the second electrode mixture layer. The first thickness is less than a third thickness of the third electrode mixture layer.

FIG. 1

EP 4 583 184 A1

# EP 4 583 184 A1

## Description

### CROSS-REFERENCE TO RELATED APPLICATION

This application claims priority to and the benefit of Korean Patent Application No. 10-2024-0002659, filed on January 8, 2024, in the Korean Intellectual Property Office, the entire content of which is incorporated herein by reference.

### BACKGROUND

#### 1. Field

According to one or more embodiments, the present disclosure relates to the present invention relates to an electrode for a rechargeable lithium battery and a rechargeable lithium battery including the same.

#### 2. Description of the Related Art

Recently, with the rapid spread of battery-utilizing electronic devices, such as mobile phones, laptop computers, electric vehicles, and/or the like, there is a rapidly increasing desire or demand for rechargeable batteries with relatively high energy density and relatively high capacity. Therefore, intensive research has been conducted to improve performance of rechargeable lithium batteries.

A rechargeable lithium battery includes a positive electrode, a negative electrode, and an electrolyte, which positive and negative electrodes include an active material in which intercalation and deintercalation (e.g. of lithium ions) are possible. For example, the rechargeable lithium battery generates electrical energy caused by oxidation and reduction reactions if (e.g., when) the lithium ions are intercalated and/or deintercalated.

### SUMMARY

One or more aspects are directed toward an electrode for a rechargeable lithium battery capable of exhibiting high stability while performing rapid charging.

One or more aspects are directed toward a rechargeable lithium battery including the electrode.

Additional aspects will be set forth in part in the description which follows and, in part, will be apparent from the description, or may be learned by practice of the presented embodiments of the disclosure.

According to one or more embodiments of the present disclosure, an electrode for a rechargeable lithium battery may include: a current collector; and a multiple active material layer on the current collector. The multiple active material layer may include: a first electrode mixture layer on the current collector; a second electrode mixture layer on the first electrode mixture layer; and a third electrode mixture layer on the second electrode mixture layer. Each of the first, second, and third electrode mixture layers may include an electrode active material and a binder. The first, second, and third electrode mixture layers may each independently have a binder amount, the binder amounts each being different binder amounts. A first thickness of the first electrode mixture layer may be less than a second thickness of the second electrode mixture layer. The first thickness may be less than a third thickness of the third electrode mixture layer.

According to one or more embodiments of disclosure, an electrode for a rechargeable lithium battery may include: a current collector; and a multiple active material layer on the current collector. The multiple active material layer may include: a first electrode mixture layer on the current collector; a second electrode mixture layer on the first electrode mixture layer; and a third electrode mixture layer on the second electrode mixture layer. Each of the first, second, and third electrode mixture layers may include an electrode active material and a binder. A difference in binder ratio between the first and second electrode mixture layers may be in a range of about 0.1 to about 0.6. A difference in binder ratio between the second and third electrode mixture layers may be in a range of about 0 to about 0.4.

### BRIEF DESCRIPTION OF THE DRAWINGS

FIG. 1 illustrates a simplified conceptual diagram showing a rechargeable lithium battery according to one or more embodiments of present disclosure.

FIGs. 2-5 each illustrate simplified cross-sectional view showing a rechargeable lithium battery according to one or more embodiments of present disclosure.

FIG. 6 illustrates a cross-sectional view showing an electrode for a rechargeable lithium battery according to one or more embodiments of present disclosure.

FIG. 7 illustrates a graph showing distribution of binder in a multi-layered electrode according to Embodiments 1 to 3 of the present disclosure.

FIG. 8 illustrates a graph showing distribution of binder in a multi-layered electrode of Comparative Examples 1 to 4.

FIG. 9 illustrates a graph showing an evaluation result of adhesive strength between a current collector and an active material layer in an electrode of Embodiments 1 to 3 of the present disclosure and Comparative Examples 1 to 4.

## DETAILED DESCRIPTION

Hereinafter, specific embodiments will be described in more detail so that those of ordinary skill in the art can easily implement them and sufficiently understand the configuration and aspect of the present disclosure. Examples of which are illustrated in the accompanying drawings, wherein like reference numerals refer to like elements throughout, and duplicative descriptions thereof may not be provided. Accordingly, one or more embodiments of will be described with reference to the accompanying drawings, to explain aspects of the present description. It should be noted, however, that the present disclosure is not limited to the following example embodiments, and may be implemented in one or more suitable forms. Rather, the example embodiments are provided only to let those skilled in the art fully know the scope of the present disclosure.

Herein, it should be understood that utilizing terms such as "comprises," "comprise," "comprising," "includes," "including," "include," "having," "has," and/or "have" are intended to designate the presence of an embodied aspect, number, step (e.g., act or task), element, and/or a (e.g., any suitable) combination thereof, but it does not preclude the possibility of the presence or addition of one or more other features, numbers, steps (e.g., acts or tasks), elements, and/or a (e.g., any suitable) combination thereof.

In the drawings, the thickness of layers, films, panels, regions, and/or the like, are exaggerated for clarity, wherein like reference numerals designate like elements throughout, and duplicative descriptions thereof may not be provided the specification. In this description, it will be understood that, if (e.g., when) an element is referred to as being "on" another element, the element can be directly on the other element or intervening elements may be present between therebetween. In the drawings, thicknesses of some components are exaggerated for effectively explaining the technical contents. Like reference numerals refer to like elements throughout, and duplicative descriptions thereof may not be provided the specification.

Unless otherwise specially noted in this description, the expression of singular form may include the expression of plural form. In some embodiments, unless otherwise specially noted, the phrase "A or B" may indicate "A but not B", "B but not A", and "A and B". components. Herein, it should be understood that the terms "comprises/includes," "comprising/including," "comprise," "include," "having," "has," and/or "have" used in this description do not exclude the presence or addition of one or more other components, but are intended to designate the presence of an embodied aspect, number, step (e.g., act or task), element, and/or a (e.g., any suitable) combination thereof.

As utilized herein, the term "combination thereof" may refer to a mixture, a stack, a composite, a copolymer, an alloy, a blend, or a reaction product.

In one or more embodiments, the term "layer" herein includes not only a shape formed on the whole surface if (e.g., when) viewed from a plan view, but also a shape formed on a partial surface.

It will be understood that, although the terms "first," "second," "third," and/or the like may be utilized herein to describe one or more suitable elements, components, regions, layers and/or sections, these elements, components, regions, layers and/or sections should not be limited by these terms. These terms are only utilized to distinguish one element, component, region, layer or section from another element, component, region, layer, or section. Thus, a first element, component, region, layer, or section described herein may be termed a second element, component, region, layer or section without departing from the teachings set forth herein.

As utilized herein, the term "and/or" includes any, and all, combinations of one or more of the associated listed items. Expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Spatially relative terms, such as "beneath," "below," "lower," "above," "upper" and/or the like, may be utilized herein to easily describe the relationship between one element or feature and another element or feature. It will be understood that the spatially relative terms are intended to encompass different orientations of a device in utilization or operation in addition to the orientation illustrated in the drawings. For example, if (e.g., when) the device in the drawings is turned over, elements described as "below" or "beneath" other elements or features will be oriented "above" the other elements or features. Thus, the example term "below" can encompass both (e.g., simultaneously) the orientations of above and below. The device may be otherwise oriented (rotated 90 degrees or at other orientations), and the spatially relative terms utilized herein may be interpreted accordingly.

The terminology utilized herein is utilized for the purpose of describing particular embodiments only, and is not intended to limit the present disclosure. Unless otherwise defined, all terms (including chemical, technical and scientific terms) utilized herein have the same meaning as commonly understood by one of ordinary skill in the art to which this disclosure pertains. It will be further understood that terms, such as those defined in commonly utilized dictionaries, should be interpreted as having a meaning that is consistent with their meaning in the context of the related art and the present disclosure, and will not be interpreted in an idealized or overly formal sense.

Example embodiments are described herein with reference to cross-sectional views, which are schematic views of idealized embodiments. As such, variations from the shapes of the illustrations as a result, for example, of manufacturing techniques and/or tolerances, are to be expected. Thus, embodiments described herein should not be construed as being limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the precise shape of a region and are not intended to limit the scope of the present claims.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

In this context, "consisting essentially of" indicates that any additional components will not materially affect the chemical, physical, optical or electrical properties of the semiconductor film.

Further, in this specification, the phrase "on a plane," or "plan view," indicates viewing a target portion from the top, and the phrase "on a cross-section" indicates viewing a cross-section formed by vertically cutting a target portion from the side.

The term "particle diameter" as utilized herein refers to an average diameter of particles if (e.g., when) the particles are spherical, and refers to an average major axis length of particles if (e.g., when) the particles are non-spherical. For example, the average particle diameter may be measured by a method well suitable to those skilled in the art, for example, may be measured by a particle size analyzer, or may be measured by a transmission electron microscopic image or a scanning electron microscopic image. It may be possible to obtain an average particle diameter value by measuring utilizing a dynamic light scattering method, performing data analysis, counting the number of particles for each particle size range, and calculating from this. Unless otherwise defined, the average particle diameter may refer to the diameter ($D_{50}$) of particles having a cumulative volume of 50 volume% in the particle size distribution. If (e.g., when) measuring by laser diffraction, the particles to be measured are dispersed in a dispersion medium and then introduced into a related art laser diffraction particle size measuring device (e.g., MT 3000 available from Microtrac, Ltd.) utilizing ultrasonic waves at about 28 kHz, and after irradiation with an output of 60 W, the average particle diameter (D50) based on 50% of the particle size distribution in the measuring device can be calculated. As utilized herein, if (e.g., when) a definition is not otherwise provided, the average particle diameter refers to a diameter ($D_{50}$) of particles having a cumulative volume of 50 volume% in the particle size distribution that is obtained by measuring the size (diameter or length of the major axis) of about 20 particles at random in a scanning electron microscopic image.

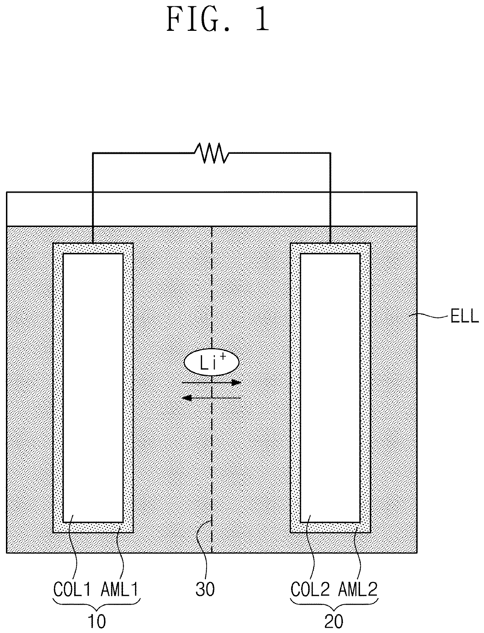

FIG. 1 illustrates a simplified conceptual diagram showing a rechargeable lithium battery according to one or more embodiments of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced and/or apart (e.g., spaced apart or separated) from each other across the separator 30. The separator 30 may be arranged between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be a medium by which lithium ions are transferred between the positive electrode 10 and the negative electrode 20. In the electrolyte ELL, the lithium ions may move through the separator 30 toward one of the positive electrode 10 and the negative electrode 20.

## Positive Electrode 10

The positive electrode 10 for a rechargeable lithium battery may include a current collector COL1 and a positive electrode active material layer AML1 formed on the current collector COL1. The positive electrode active material layer AML1 may include a positive electrode active material and further include a binder and/or a conductive material (e.g., electron conductor).

For example, the positive electrode 10 may further include an additive that can serve as a sacrificial positive electrode.

An amount of the positive electrode active material may range from about 90 wt% to about 99.5 wt% based on 100 wt% of the positive electrode active material layer AML1. Amounts of the binder and the conductive material may each independently be about 0.5 wt% to about 5 wt% based on 100 wt% of the positive electrode active material layer AML1.

The binder may serve to improve attachment of positive electrode active material particles to each other and also to improve attachment of the positive electrode active material to the current collector COL1. The binder may include, for example, polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The conductive material (e.g., electron conductor) may be utilized to provide an electrode with conductivity, and any suitable conductive material without causing chemical change of a battery may be utilized as the conductive material (e.g., to provide the battery). Examples of the conductive material may include, a carbon-based material such as natural graphite, artificial graphite, carbon black, acetylene black, Ketjenblack, carbon fiber, carbon nano-fiber, and carbon nano-tube; a metal powder or metal fiber containing at least one (e.g., one or more) of (e.g., selected from among) copper, nickel, aluminum, and silver; a conductive polymer such as a polyphenylene derivative; and/or a (e.g., any suitable) mixture thereof.

Al may be utilized as the current collector COL1, but the present disclosure is not limited thereto.

**Positive Electrode Active Material**

The positive electrode active material in the positive electrode active material layer AML1 may include a compound (e.g., lithiated intercalation compound) that may reversibly intercalate and de-intercalate lithium. For example, the positive electrode active material may include at least one type or kind of composite oxide including lithium and metal that is selected from among cobalt, manganese, nickel, and/or a (e.g., any suitable) combination thereof.

The composite oxide may include a lithium transition metal composite oxide, for example, lithium-nickel-based oxide, lithium-cobalt-based oxide, lithium-manganese-based oxide, lithium-iron-phosphate-based compounds, cobalt-free nickel-manganese-based oxide, and/or a (e.g., any suitable) combination thereof.

For example, the positive electrode active material may include a compound expressed by any one selected from among the following chemical formulae. $Li_aA_{1-b}X_bO_{2-c}D_c$ ($0.90 \leq a \leq 1.8$, $0 \leq b \leq 0.5$, $0 \leq c \leq 0.05$), $Li_aMn_{2-b}X_bO_{4-c}D_c$ ($0.90 \leq a \leq 1.8$, $0 \leq b \leq 0.5$, $0 \leq c \leq 0.05$), $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$), $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$), $Li_aNi_bCo_cL^1_dGeO_2$ ($0.90 \leq a \leq 1.8$, $0 \leq b \leq 0.9$, $0 \leq c \leq 0.5$, $0 \leq d \leq 0.5$, $0 \leq e \leq 0.1$), $Li_aNiG_bO_2$ ($0.90 \leq a \leq 1.8$, $0.001 \leq b \leq 0.1$), $LiaCoG_bO_2$ ($0.90 \leq a \leq 1.8$, $0.001 \leq b \leq 0.1$), $LiaMn_{1-b}G_bO_2$ ($0.90 \leq a \leq 1.8$, $0.001 \leq b \leq 0.1$), $Li_aMn_2G_bO_4$ ($0.90 \leq a \leq 1.8$, $0.001 \leq b \leq 0.1$), $Li_aMn_{1-g}G_gPO_4$ ($0.90 \leq a \leq 1.8$, $0 \leq g \leq 0.5$), $Li_{(3-f)}Fe_2(PO_4)_3$ ($0 \leq f \leq 2$), and $Li_aFePO_4$ ($0.90 \leq a \leq 1.8$).

In the preceding chemical formulae, A may be Ni, Co, Mn, and/or a (e.g., any suitable) combination thereof, X may be Al, Ni, Co, Mn, Cr, Fe, Mg, Sr, V, a rare earth element, and/or a (e.g., any suitable) combination thereof, D may be O, F, S, P, and/or a (e.g., any suitable) combination thereof, G may be Al, Cr, Mn, Fe, Mg, La, Ce, Sr, V, and/or a (e.g., any suitable) combination thereof, and $L^1$ may be Mn, Al, and/or a (e.g., any suitable) combination thereof.

For example, the positive electrode active material may be a high nickel-based positive electrode active material having a nickel content (e.g., amount) of equal to, or greater than, about 80 mol%, equal to, or greater than, about 85 mol%, equal to, or greater than, about 90 mol%, equal to, or greater than, about 91 mol%, or equal to, or greater than about 94 mol%; and equal to, or less than, about 99 mol%, based on 100 mol% of an amount of metal devoid of lithium in the lithium transition metal composite oxide. The high nickel-based positive electrode active material may achieve high capacity and thus may be applied to a high-capacity and high-density rechargeable lithium battery.

**Negative Electrode 20**

The negative electrode 20 for a rechargeable lithium battery may include a current collector COL2 and a negative electrode active material layer AML2 positioned on the current collector COL2. The negative electrode active material layer AML2 may include a negative electrode active material and may further include a binder and/or a conductive material (e.g., electron conductor).

For example, the negative electrode active material layer AML2 may include a negative electrode active material of about 90 wt% to about 99 wt%, a binder of about 0.5 wt% to about 5 wt%, and a conductive material of about 0 wt% to about 5 wt%.

The binder may serve to improve attachment of negative electrode active material particles to each other and also to improve attachment of the negative electrode active material to the current collector COL2. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, and/or a (e.g., any suitable) combination thereof.

The aqueous binder may include styrene-butadiene rubber, (meth)acrylated styrene-butadiene rubber, (meth) acrylic rubber, butyl rubber, fluoro elastomer, polyethylene oxide, polyvinyl pyrrolidone, polyepichlorohydrine, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, and/or a (e.g., any suitable) combination thereof.

If (e.g., when) an aqueous binder is utilized as the negative electrode binder, a cellulose-based compound capable of providing viscosity may further be included. The cellulose-based compound may include at least one (e.g., one or more) of (e.g., selected from among) carboxymethyl cellulose, hydroxypropylmethyl cellulose, methyl cellulose, and alkali metal salts thereof. The alkali metal may include Na, K, or Li.

The dry binder may include a fibrillizable polymer material, for example, polytetrafluoroethylene, polyvinylidene fluoride, polyvinylidene fluoride-hexafluoropropylene copolymer, polyethylene oxide, and/or a (e.g., any suitable) combination thereof.

The conductive material (e.g., electron conductor) may be utilized to provide an electrode with conductivity, and any suitable conductive material without causing chemical change of a battery may be utilized as the conductive material (e.g., to provide the battery). For example, the conductive material may include a carbon-based material such as natural graphite, artificial graphite, carbon black, acetylene black, Ketjenblack, carbon fiber, carbon nano-fiber, and carbon nanotube; a metal powder or metal fiber including one or more of copper, nickel, aluminum, and silver; a conductive polymer such as a polyphenylene derivative; and/or a (e.g., any suitable) mixture thereof.

The current collector COL2 may include a copper foil, a nickel foil, a stainless-steel foil, a titanium foil, a nickel foam, a copper foam, a polymer substrate coated with a conductive metal, and/or a (e.g., any suitable) combination thereof.

An electrode density of the negative electrode may range from about 1.0 gram per cubic centimeter (g/cc) to about 2.0 g/cc, for example, from about 1.0 g/cc to about 1.8 g/cc or from about 1.3 g/cc to about 1.8 g/cc.

In this description, the term "electrode density" may refer to a density calculated by dividing a measured load amount of an electrode by a thickness of the electrode after charging and discharging, (e.g., once or twice) at 0.1C to 0.2C under the condition of sufficient impregnation of an electrode into an electrolyte.

If (e.g., when) the electrode density of the negative electrode is present within the described ranges, it may be possible to effectively improve rapid charging/discharging characteristics and cycle-life characteristics, for example, high-rate cycle-life characteristics.

**Negative Electrode Active Material**

The negative electrode active material in the negative electrode active material layer AML2 may include a material that may reversibly intercalate and de-intercalate lithium ions, lithium metal, a lithium metal alloy, a material that may dope and de-dope lithium, or transition metal oxide.

The material that may reversibly intercalate and de-intercalate lithium ions may include a carbon-based negative electrode active material, for example, crystalline carbon, amorphous carbon, and/or a (e.g., any suitable) combination thereof. For example, the crystalline carbon may include graphite such as non-shaped, sheet-shaped, flake-shaped, sphere-shaped, or fiber-shaped natural or artificial graphite, and the amorphous carbon may include soft carbon, hard carbon, mesophase pitch carbon, or calcined coke.

The lithium metal alloy may include an alloy of lithium and metal that is selected from among Na, K, Rb, Cs, Fr, Be, Mg, Ca, Sr, Si, Sb, Pb, In, Zn, Ba, Ra, Ge, Al, and Sn.

The material that may dope and de-dope lithium may include a Si-based negative electrode active material or a Sn-based negative electrode active material. The Si-based negative electrode active material may include silicon, silicon-carbon composite, $SiO_x$ ($0<x\leq2$), Si-Q alloy (where Q is alkali metal, alkaline earth metal, Group 13 element, Group 14 element (except for Si), Group 15 element, Group 16 element, transition metal, rare-earth element, and/or a (e.g., any suitable) combination thereof), and/or a (e.g., any suitable) combination thereof. The Sn-based negative electrode active material may include Sn, $SnO_2$, $SnO_x$ ($0<x\leq2$), a Sn-based alloy, and/or a (e.g., any suitable) combination thereof.

The silicon-carbon composite may be a composite of silicon and amorphous carbon. According to one or more embodiments, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and for example, the primary silicon particles may be coated with the amorphous carbon. The secondary particles may be present dispersed in an amorphous carbon matrix.

The silicon-carbon composite may further include crystalline carbon. For example, the silicon-carbon composite may include a core including crystalline carbon and silicon particles and may also include an amorphous carbon coating layer positioned on a surface of the core.

The Si-based negative electrode active material or the Sn-based negative electrode active material may be utilized in combination with a carbon-based negative electrode active material.

**Separator 30**

Based on the type or kind of the rechargeable lithium battery, the separator 30 may be present between positive electrode 10 and the negative electrode 20. The separator 30 may include at least one (e.g., one or more) of (e.g., selected from among) polyethylene, polypropylene, and polyvinylidene fluoride, and may have a multi-layered separator thereof such as one selected from among a polyethylene/polypropylene bi-layered separator, a polyethylene/polypropylene/-polyethylene tri-layered separator, and a polypropylene/polyethylene/polypropylene tri-layered separator.

The separator 30 may include a porous substrate and a coating layer positioned on one or both (e.g., opposite) surfaces of the porous substrate, which coating layer includes an organic material, an inorganic material, and/or a (e.g., any suitable) combination thereof.

The porous substrate may be a polymer layer including at least one selected from among polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be a copolymer or mixture including two or more of the materials mentioned herein.

The organic material may include a polyvinylidenefluoride-based copolymer or a (meth)acrylic copolymer.

The inorganic material may include an inorganic particle selected from among $Al_2O_3$, $SiO_2$, $TiO_2$, $SnO_2$, $CeO_2$, MgO, NiO, CaO, GaO, ZnO, $ZrO_2$, $Y_2O_3$, SrTiOs, BaTiOs, $Mg(OH)_2$, Boehmite, and/or a (e.g., any suitable) combination thereof, but the present disclosure is not limited thereto.

The organic material and the inorganic material may be present mixed in one coating layer or may be present as a stack of a coating layer including the organic material and a coating layer including an inorganic material.

**Electrolyte ELL**

The electrolyte ELL for a rechargeable lithium battery may include a non-aqueous organic solvent and a lithium salt.

The non-aqueous organic solvent may serve as a medium for transmitting ions that participate in an electrochemical reaction of a battery.

The non-aqueous organic solvent may include a carbonate-based solvent, an ester-based solvent, an ether-based solvent, a ketone-based solvent, an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, or caprolactone.

The ether-based solvent may include dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The aprotic solvent may include nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be utilized alone or in a mixture of two or more substances.

In some embodiments, if (e.g., when) a carbonate-based solvent is utilized, a cyclic carbonate and a chain carbonate may be mixed and utilized, and the cyclic carbonate and the chain carbonate may be mixed in a volume ratio of about 1:1 to about 1:9.

The lithium salt may be a material that is dissolved in the non-aqueous organic solvent to serve as a supply source of lithium ions in a battery and plays a role in enabling a basic operation of a rechargeable lithium battery and in promoting the movement of lithium ions between positive and negative electrodes. The lithium salt may include, for example, at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, Lil, $LiN(SO_3C_2F_5)_2$, $Li(FSO_2)_2N$, lithium bis(fluorosulfonyl)imide (LiFSI), $LiC_4F_9SO_3$, $LiN(C_xF_{2x+1}SO_2)(C_yF_{2y+1}SO_2)$ (where x and y are integers between 1 to 20), lithium trifluoromethane sulfonate, lithium tetrafluoroethanesulfonate, lithium difluorobis(oxalato)phosphate (LiDFOB), and lithium bis(oxalato) borate (LiBOB)

**Rechargeable Lithium Battery**

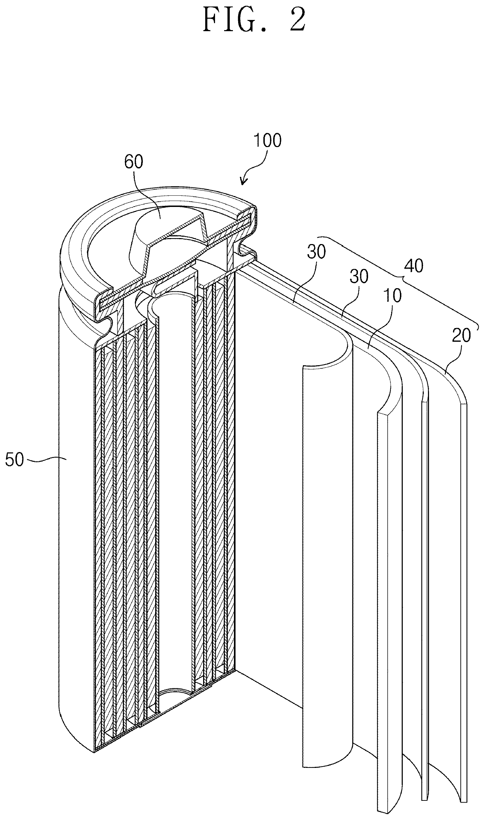

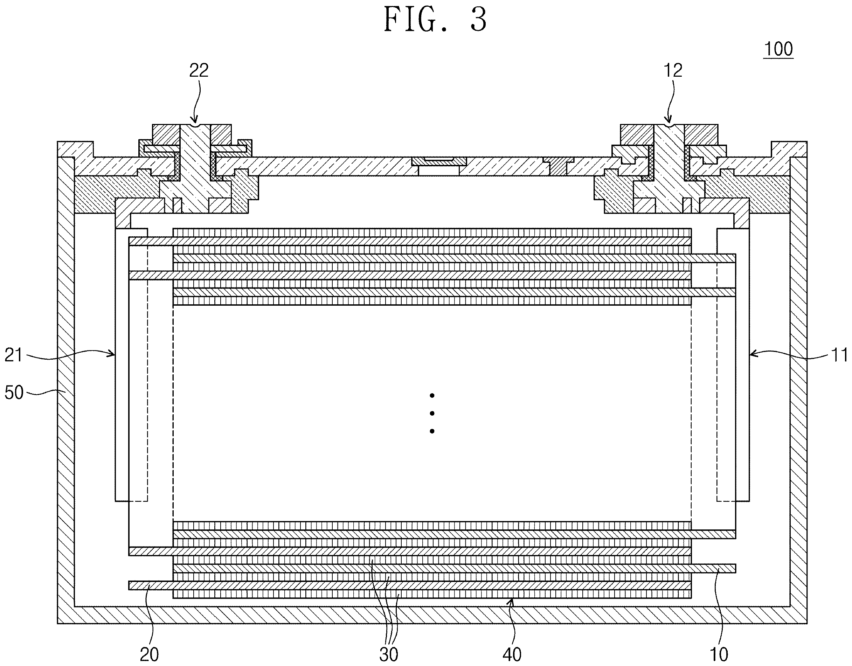

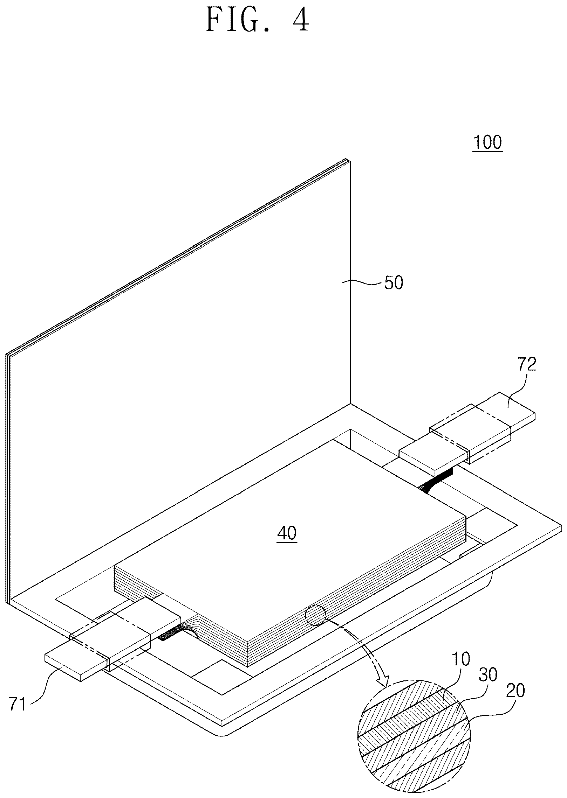

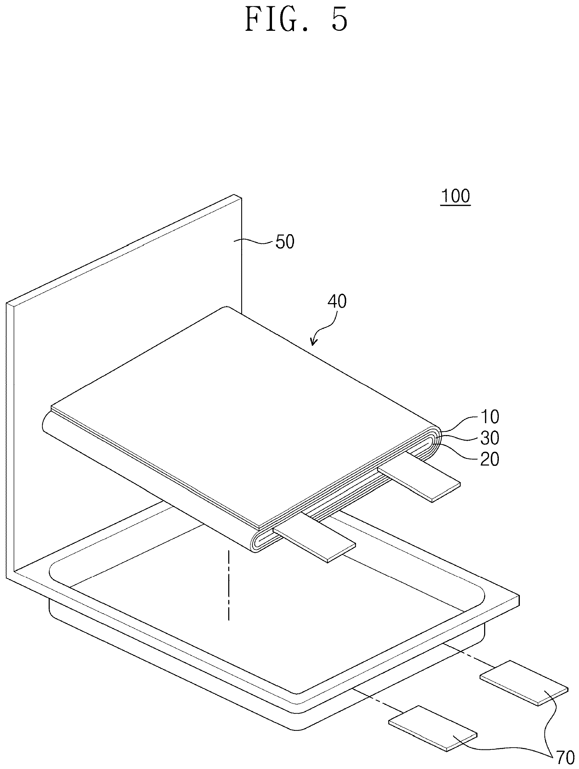

Based on shape of a rechargeable lithium battery, the rechargeable lithium battery may be classified into cylindrical, prismatic, pouch, and coin types (kinds). FIGs. 2 to 5 illustrate simplified diagrams showing a rechargeable lithium battery according to one or more embodiments. FIG. 2 shows a cylindrical battery, FIG. 3 shows a prismatic battery, and FIGs. 4 and 5 show pouch-type or kind batteries. Referring to FIGs. 2 to 4, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated with an electrolyte. The rechargeable lithium battery 100 may include a sealing member 60 that seals the casing 50 as illustrated in FIG. 2. In some embodiments, as illustrated in FIG. 3, the rechargeable lithium battery 100 may include a positive electrode lead tab 11, a positive electrode terminal 12, a negative electrode lead tab 21, and a negative electrode terminal 22. As shown in FIG. 4, the rechargeable lithium battery 100 may include electrode tabs, such as a positive electrode tab 71 and a negative electrode tab 72, which serve as an electrical path for externally inducing a current generated in the electrode assembly 40. As shown in FIG. 5, the rechargeable lithium battery 100 may include electrode tabs 70 which serve as an electrical path for externally inducing a current generated in the electrode assembly 40.

In one or more embodiments described herein, a detailed description of technical features repetitive to those discussed with reference to FIGs. 1 to 5 will not be provided, and the differences thereof will be discussed in more detail.

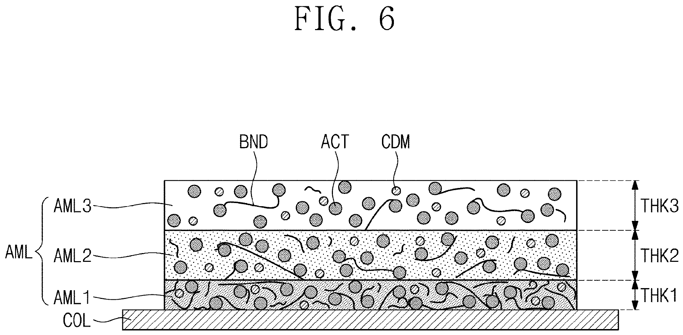

FIG. 6 illustrates a cross-sectional view showing an electrode for a rechargeable lithium battery according to one or more embodiments of the present disclosure. Referring to FIG. 6, there may be provided a current collector COL and a multiple active material layer AML on one surface of the current collector COL. The multiple active material layer AML may include a first electrode mixture layer AML1 on the current collector COL, a second electrode mixture layer AML2 on the first electrode mixture layer AML1, and a third electrode mixture layer AML3 on the second electrode mixture layer AML2. Each of the first, second, and third electrode mixture layers AML1, AML2, and AML3 may include an electrode active material ACT and a binder BND.

According to one or more embodiments of the present disclosure, an electrode for a rechargeable lithium battery may be a positive electrode or a negative electrode. If (e.g., when) the electrode is a positive electrode, the electrode active material ACT may be a positive electrode active material, such as lithium nickel-based oxide, lithium cobalt-based oxide, lithium manganese-based oxide, lithium iron phosphorus-based compound, cobalt-free nickel manganese-based oxide, and/or a (e.g., any suitable) combination thereof.

If (e.g., when) the electrode is a negative electrode, the electrode active material ACT may be a negative active material, such as a Si-based material, a Sn-based material, a carbon-based material, and/or the like. The carbon-based material may include at least one selected from among crystalline artificial graphite, crystalline natural graphite, amorphous hard carbon, low-crystalline soft carbon, carbon black, acetylene black, Ketjenblack, super P, graphene, and fibrous carbon.

In one or more embodiments, the first, second, and third electrode mixture layers AML1, AML2, and AML3 may include the same electrode active material. In one or more embodiments, the first, second, and third electrode mixture layers AML1, AML2, and AML3 may include different active electrode active materials.

The first, second, and third electrode mixture layers AML1, AML2, and AML3 may have different binder amounts (e.g., may each independently have a different binder amounts). In the present disclosure, a binder amount may be a ratio of a weight of binder in an electrode mixture layer to a total weight of the electrode mixture layer. The binder amount of the first electrode mixture layer AML1 may be greater than that of the second electrode mixture layer AML2, and the binder amount of the second electrode mixture layer AML2 may be greater than that of the third electrode mixture layer AML3.

A difference in binder ratio between the first electrode mixture layer AML1 and the second electrode mixture layer AML2 may range from about 0.1 to about 0.6, for example, from about 0.1 to about 0.4 or from about 0.2 to about 0.3. A difference in binder ratio between the second electrode mixture layer AML2 and the third electrode mixture layer AML3 may range from about 0 to about 0.4, for example, from about 0.1 to about 0.4 or from about 0.2 to about 0.3.

In this description, the term "binder ratio" may refer to a ratio of a weight of binder included in each layer to a total weight of binder included in the first, second, and third electrode mixture layers AML1, AML2, and AML3. For example, if (e.g., when) 1 is given as the total weight of binder included in the first, second, and third electrode mixture layers AML1, AML2, and AML3, the term "binder ratio" may refer to a weight ratio of binder included in each layer. The binder ratio may be a dimensionless value, and a sum of binder fractions in every layer may be 1. In an electrode according to one or more embodiments of disclosure, as the electrode mixture layers have substantially the same base area, the binder ratio of each electrode mixture layer may be obtained through Equation 1 .

[Equation 1]

$$\text{A binder ratio of nth electrode mixture layer} = \frac{\text{A binder amount of nth electrode mixture layer} \times \text{a thickness of nth electrode mixture layer}}{\sum_{n=1}^{3} \text{a binder amount of nth electrode mixture layer} \times \text{a thickness of nth electrode mixture layer}}$$

For example, the first electrode mixture layer AML1 may have a binder amount of about 5 wt% and a thickness THK1 of about 20 micrometer (μm), the second electrode mixture layer AML2 may have a binder amount of about 2 wt% and a thickness THK2 of about 40 μm, and the third electrode mixture layer AML3 may have a binder amount of about 0.5 wt% and a thickness THK3 of about 40 μm. In this case, the first electrode mixture layer AML1 may have a binder ratio of about 0.5, the second electrode mixture layer AML2 may have a binder ratio of about 0.4, and the third electrode mixture layer AML3 may have a binder ratio of about 0.1.

The binder amount of the first electrode mixture layer AML1 may be greater than that of the second electrode mixture layer AML2, and may range from about 0.5 wt% to about 10 wt%, for example, from about 2 wt% to about 8 wt% relative to the total weight of the first electrode mixture layer AML1. The binder amount of the first electrode mixture layer AML1 in direction contact with the current collector COL may be greater than those of the second and third electrode mixture layers AML2 and AML3, and this configuration may increase adhesive strength between a current collector and an electrode mixture layer.

If (e.g., when) the binder amount of the first electrode mixture layer AML1 is excessively (or substantially) greater than the described range, there may be a relative reduction in amount of an active material and a conductive material. Therefore, there may be an increase in electrode internal resistance, a reduction in electrical conductivity, and a decrease in capacity and energy density.

The binder amount of the second electrode mixture layer AML2 may be less than that of the first electrode mixture layer AML1 and greater than that of the third electrode mixture layer AML3. The binder amount of the second electrode mixture layer AML2 may range from about 0.5 wt% to about 10 wt%, for example, from about 0.5 wt% to about 4 wt% relative to the total weight of the second electrode mixture layer AML2. The binder amount of the third electrode mixture layer AML3 may be less than that of the second electrode mixture layer AML2, and may range from about 0.1 wt% to about 5 wt%, for example, from about 0.1 wt% to about 4 wt% relative to the total weight of the third electrode mixture layer AML3. A reduction in binder amount of the second electrode mixture layer AML2 and the third electrode mixture layer AML3 may cause an electrode to have high electrical conductivity and improved capacity characteristics.

If (e.g., when) a difference in binder amount between neighboring electrode mixture layers is greater than about 5 wt%, substantial compositional non-uniformity of an electrode may induce delamination between neighboring electrode mixture layers. According to one or more embodiments of the present disclosure, the multiple active material layer AML may be formed of three or more layers, and the binder amount of the second electrode mixture layer AML2 may be greater than that of the third electrode mixture layer AML3. The binder amount may have a gradient that progressively decreases in a direction from the first electrode mixture layer AML1 to the third electrode mixture layer AML3.

If (e.g., when) the binder amount in the electrode mixture layer AML gradually decreases with increasing distance from the current collector COL as discussed herein, substantial compositional non-uniformity between neighboring mixture layers may be reduced to decrease an interfacial resistance. It may therefore be possible to prevent or reduce delamination between neighboring mixture layers.

The binder BND may include a non-aqueous binder, an aqueous binder, a dry binder, and/or a (e.g., any suitable) combination thereof. For example, the binder BND may include at least one selected from among polyvinylidene fluorides (PVDFs), styrene butadiene rubbers (SBR), mussel proteins, polyolefin-based binders, and silane-based binders, and for example may include a styrene butadiene rubber (SBR) binder.

In one or more embodiments, the first, second, and third electrode mixture layers AML1, AML2, and AML3 may include the same binder. In one or more embodiments, the first, second, and third electrode mixture layers AML1, AML2, and AML3 may include different binders.

According to one or more embodiments of the present disclosure, an electrode for a rechargeable lithium battery may further include a conductive material CDM for improving electrical conductivity. Any electrically conductive material may be utilized as the conductive material CDM, unless it causes a chemical change. In one or more embodiments, the first, second, and third electrode mixture layers AML1, AML2, and AML3 may include the same conductive material. In one or more embodiments, the first, second, and third electrode mixture layers AML1, AML2, and AML3 may include different conductive materials.

According to one or more embodiments of the present disclosure, an electrode for a rechargeable lithium battery may further include a filler to suppress or reduce expansion of the electrode. The filler may include, for example, an olefin-based polymer such as polyethylene and polypropylene or a fibrous material such as glass fiber and carbon fiber. The type or kind of filler may be the same for each layer, or the types (kinds) of fillers included in two or more layers may be different from each other.

Referring back to FIG. 6, the first thickness THK1 of the first electrode mixture layer AML1 may be less than the second thickness THK2 of the second electrode mixture layer AML2 and the third thickness THK3 of the third electrode mixture layer AML3. The second thickness THK2 may be substantially the same as, or different from, the third thickness THK3.

For example, the first thickness THK1, the second thickness THK2, and the third thickness THK3 may have a ratio of a:1:1. In this case, "a" may range from about 0.3 to about 0.7, for example, from about 0.3 to about 0.6, or from about 0.4 to about 0.6.

In some embodiments, because the current collector COL is coated with a small thickness, (e.g., the first thickness THK1), of the first electrode mixture layer AML1 close to the current collector COL, there may be an increase in adhesion performance between the multiple active material layer AML and the current collector COL. In some embodiments, because the current collector COL is coated with a large thickness (e.g., the second thickness THK2 and the third thickness THK3 of the second electrode mixture layer AML2 and the third electrode mixture layer AML3 that are distant from the current collector COL), there may be an increase in an amount of an active material, which may result in an improvement in lithium conductivity. If (e.g., when), the first thickness THK1, the second thickness THK2, and the third thickness THK3 satisfy the described ranges, the battery may exhibit rapid charging performance while maintaining high stability.

The rechargeable lithium battery according to one or more embodiments of the present disclosure may be utilized in (e.g., applied to) automotive vehicles, mobile phones, and/or any other electrical devices, but the present disclosure is not limited thereto.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or $\pm$ 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

The following will describe Embodiments and Comparative Examples of the present disclosure. However, the following examples are only one or more possible embodiments of the present disclosure, and the present disclosure is not limited to the following examples.

## EXAMPLES

### Embodiment 1

### Preparation of First Negative Electrode Mixture Slurry

A styrene butadiene rubber (SBR) was utilized as a binder, and a silicon-graphite composite and graphite included in a weight ratio of 95:5 were utilized as a negative electrode active material, such that the binder, the negative electrode active material, and carbon black (conductive material) were weighed to a ratio of 5.8:90:4.2, and then were added to distilled water and mixed to prepare a negative electrode mixture slurry for a first negative electrode mixture layer.

### Preparation of Second Negative Electrode Mixture Slurry

A styrene butadiene rubber (SBR) was utilized as a binder, and a silicon-graphite composite and graphite included in a weight ratio of 95:5 were utilized as a negative electrode active material, such that the binder, the negative electrode active material, and carbon black (conductive material) were weighed to a ratio of 1.7:95:3.3, and then were added to distilled water and mixed to prepare a negative electrode mixture slurry for a second negative electrode mixture layer.

### Preparation of Third Negative Electrode Mixture Slurry

A styrene butadiene rubber (SBR) was utilized as a binder, and a silicon-graphite composite and graphite included in a weight ratio of 95:5 were utilized as a negative electrode active material, such that the binder, the negative electrode active material, and carbon black (conductive material) were weighed to a ratio of 0.4:95:4.6, and then were added to distilled water and mixed to prepare a negative electrode mixture slurry for a third negative electrode mixture layer.

**Manufacture of Negative Electrode**

The first negative electrode mixture slurry was coated in a thickness of 20 micrometer ($\mu$m) on a copper current collector, the second negative electrode mixture slurry was coated in a thickness of 40 $\mu$m on a first negative electrode mixture layer, the third negative electrode mixture slurry was coated in a thickness of 40 $\mu$m on a second negative electrode mixture layer, and then each (e.g., all) slurry component was dried and roll-pressed to manufacture a negative electrode whose total thickness was 80 $\mu$m.

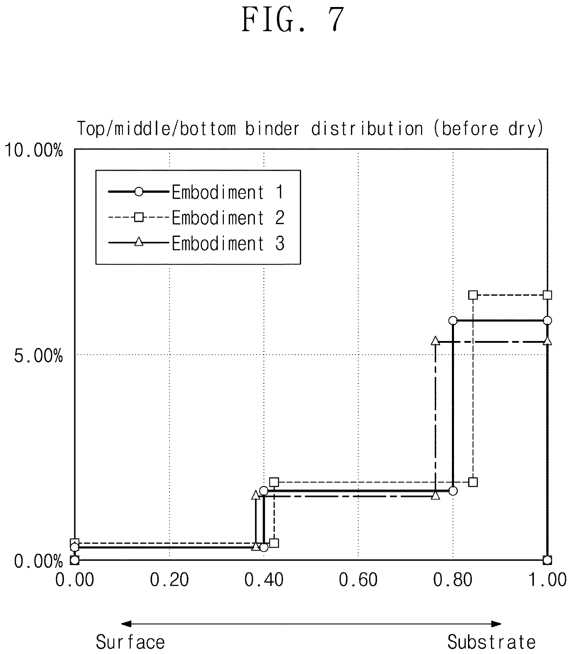

A binder ratio and a binder distribution for each layer were listed in Table 1 and FIG. 7.

**Embodiment 2**

A negative electrode was manufactured by the same method as that of Embodiment 1, except that the first negative electrode mixture slurry was coated in a thickness of 15 $\mu$m in manufacturing a negative electrode of Embodiment 1.

A binder ratio and a binder distribution for each layer were listed in Table 1 and FIG. 7.

**Embodiment 3**

A negative electrode was manufactured by the same method as that of Embodiment 1, except that the first negative electrode mixture slurry was coated in a thickness of 25 $\mu$m in manufacturing a negative electrode of Embodiment 1.

A binder ratio and a binder distribution for each layer were listed in Table 1 and FIG. 7.

**Comparative Example 1**

**Preparation of First Negative Electrode Mixture Slurry**

A styrene butadiene rubber (SBR) was utilized as a binder, and a silicon-graphite composite and graphite included in a weight ratio of 95:5 were utilized as a negative electrode active material, such that the binder, the negative electrode active material, and carbon black (conductive material) were weighed to a ratio of 3.6:95:1.4, and then were added to distilled water and mixed to prepare a negative electrode mixture slurry for a first negative electrode mixture layer.

**Preparation of Second Negative Electrode Mixture Slurry**

A styrene butadiene rubber (SBR) was utilized as a binder, and a silicon-graphite composite and graphite included in a weight ratio of 95:5 were utilized as a negative electrode active material, such that the binder, the negative electrode active material, and carbon black (conductive material) were weighed to a ratio of 0.4:95:4.6, and then were added to distilled water and mixed to prepare a negative electrode mixture slurry for a second negative electrode mixture layer.

**Manufacture of Negative Electrode**

The first negative electrode mixture slurry was coated in a thickness of 50 $\mu$m on a copper current collector, the second negative electrode mixture slurry was coated in a thickness of 50 $\mu$m on a first negative electrode mixture layer, and then each (e.g., all) slurry component was dried and roll-pressed to manufacture a negative electrode whose total thickness was 80 $\mu$m.

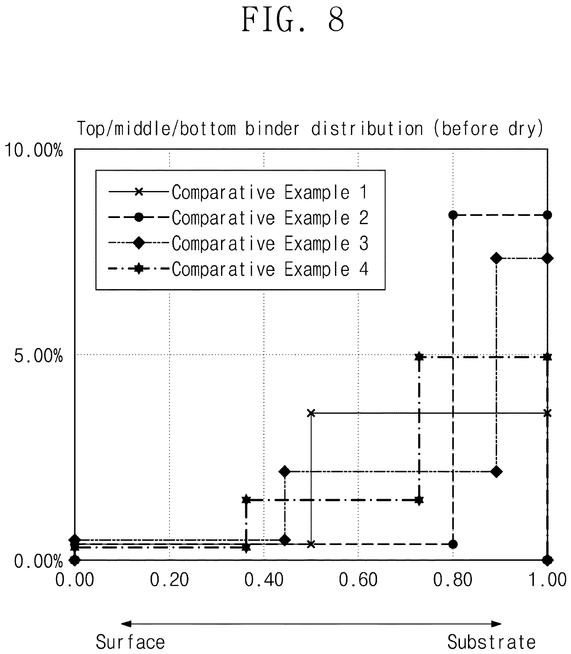

A binder ratio and a binder distribution for each layer were listed in Table 1 and FIG. 8.

**Comparative Example 2**

**Preparation of First Negative Electrode Mixture Slurry**

A styrene butadiene rubber (SBR) was utilized as a binder, and a silicon-graphite composite and graphite included in a weight ratio of 95:5 were utilized as a negative electrode active material, such that the binder, the negative electrode active material, and carbon black (conductive material) were weighed to a ratio of 8.4:90:1.6, and then were added to distilled water and mixed to prepare a negative electrode mixture slurry for a first negative electrode mixture layer.

**Preparation of Second Negative Electrode Mixture Slurry**

A styrene butadiene rubber (SBR) was utilized as a binder, and a silicon-graphite composite and graphite included in a weight ratio of 95:5 were utilized as a negative electrode active material, such that the binder, the negative electrode active material, and carbon black (conductive material) were weighed to a ratio of 0.4:95:4.6, and then were added to distilled water and mixed to prepare a negative electrode mixture slurry for a second negative electrode mixture layer.

**Manufacture of Negative Electrode**

The first negative electrode mixture slurry was coated in a thickness of 20 $\mu$m on a copper current collector, the second negative electrode mixture slurry was coated in a thickness of 80 $\mu$m on a first negative electrode mixture layer, and then all slurry was dried and roll-pressed to manufacture a negative electrode whose total thickness was 80 $\mu$m.
A binder ratio and a binder distribution for each layer were listed in Table 1 and FIG. 8.

**Comparative Example 3**

A negative electrode was manufactured by the same method as that of Embodiment 1, except that the first negative electrode mixture slurry was coated in a thickness of 10 $\mu$m in manufacturing a negative electrode of Embodiment 1.
A binder ratio and a binder distribution for each layer were listed in Table 1 and FIG. 8.

**Comparative Example 4**

A negative electrode was manufactured by the same method as that of Embodiment 1, except that the first negative electrode mixture slurry was coated in a thickness of 30 $\mu$m in manufacturing a negative electrode of Embodiment 1.
A binder ratio and a binder distribution for each layer were listed in Table 1 and FIG. 8.

Table 1

|  | Binder ratio | | |
|---|---|---|---|
|  | First mixture layer | Second mixture layer | Third mixture layer |
| Embodiment 1 | 0.58 | 0.34 | 0.08 |
| Embodiment 2 | 0.51 | 0.40 | 0.09 |
| Embodiment 3 | 0.63 | 0.30 | 0.07 |
| Comparative Example 1 | 0.90 | 0.10 | - |
| Comparative Example 2 | 0.84 | 0.16 | - |
| Comparative Example 3 | 0.41 | 0.48 | 0.11 |
| Comparative Example 4 | 0.67 | 0.26 | 0.06 |

**Evaluation Example: Adhesive Strength of Electrode Plate**

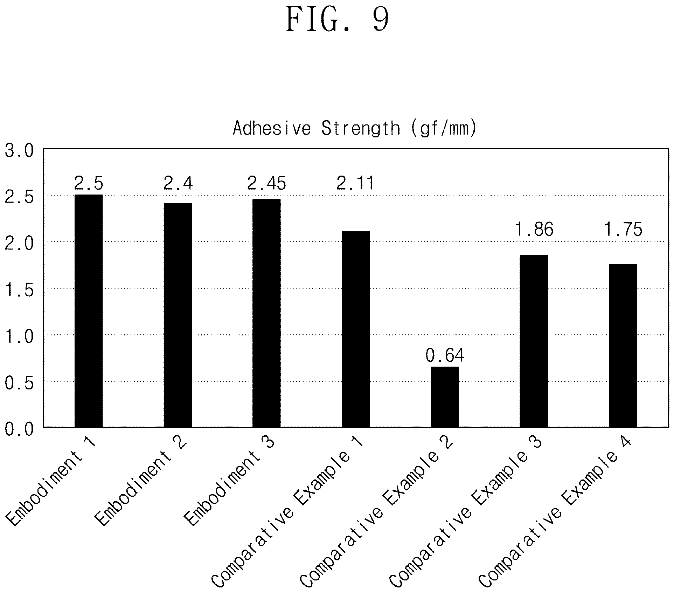

A test of adhesive strength was conducted on the electrodes manufactured in Embodiments 1 to 3 and Comparative Examples 1 to 4. After a surface of each of the electrodes manufactured in Embodiments 1 to 3 and Comparative Examples 1 to 4 was sliced and fixed on a slide glass, 180° peel strength was measured while peeling the electrode current collector, and results were listed FIG. 9.
Referring to FIG. 9, without being bound by any particular theory, it is ascertained that adhesive strength is superior if (e.g., when) an electrode mixture layer is formed of three layers than if (e.g., when) an electrode mixture layer is formed of only two layers. In addition, without being bound by any particular theory, it is ascertained that there is an increase in adhesive strength if (e.g., when) first, second, and third electrode mixture layers have a certain thickness ratio.

According to one or more embodiments of the present disclosure, an electrode for a rechargeable lithium battery may include a multiple active material layer. A first electrode mixture layer adjacent to a current collector may have a thickness less than that of a second electrode mixture layer spaced and/or apart (e.g., spaced apart or separated) from the current collector. The first and second electrode mixture layers may have different binder amounts. There may thus, without being bound by any particular theory, be an increase in adhesive strength between the current collector and the active material layer. A rechargeable lithium battery according to the present disclosure may thus maintain excellent or suitable capacity and density characteristics.

A battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the components of the device may be formed on one integrated circuit (IC) chip or on separate IC chips. Further, the components of the device may be implemented on a flexible printed circuit film, a tape carrier package (TCP), a printed circuit board (PCB), or formed on one substrate. Further, the components of the device may be a process or thread, running on one or more processors, in one or more computing devices, executing computer program instructions and interacting with other system components for performing the functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, and/or the like. Also, a person of skill in the art should recognize that the functionality of computing devices may be combined or integrated into a single computing device, or the functionality of a particular computing device may be distributed across one or more other computing devices without departing from the scope of the present disclosure.

While this disclosure has been described in connection with what is presently considered to be example embodiments, it is to be understood that the present disclosure is not limited to the disclosed example embodiments and is intended to cover one or more suitable modifications and equivalent arrangements included within the spirit and scope of the appended claims, and equivalents thereof. Therefore the aforementioned embodiments should be understood to be examples, but not limiting this disclosure in any way.

**Claims**

1. An electrode comprising:

   a current collector (COL); and
   a multiple active material layer (AML) on the current collector (COL),
   the multiple active material layer (AML) comprising:

   a first electrode mixture layer (AML1) on the current collector (COL);
   a second electrode mixture layer (AML2) on the first electrode mixture layer (AML1); and
   a third electrode mixture layer (AML3) on the second electrode mixture layer (AML2),
   each of the first, second, and third electrode mixture layers (AML3) comprising an electrode active material (ACT) and a binder (BND),
   the first, second, and third electrode mixture layers (AML1, AML2, AML3) each independently having a binder (BND) amount, the binder (BND) amounts each being different,
   a first thickness (THK1) of the first electrode mixture layer (AML1) being less than a second thickness (THK2) of the second electrode mixture layer (AML2), and
   the first thickness (THK1) being less than a third thickness (THK3) of the third electrode mixture layer (AML3),
   wherein the electrode is for a rechargeable lithium battery (100).

2. The electrode as claimed in claim 1, wherein the second thickness (THK2) is substantially the same as the third thickness (THK3).

3. The electrode as claimed in claim 1 or 2, wherein the first thickness (THK1), the second thickness (THK2), and the third thickness (THK3) have a ratio of a:1:1,
   wherein a is 0.3 to 0.7.

4. The electrode as claimed in any of claims 1 to 3, wherein the binder (BND) of each of the first, second, and third electrode mixture layers (AML3) comprises at least one selected from among polyvinylidene fluorides (PVDFs), styrene butadiene rubbers (SBR), mussel proteins, polyolefin-based binders, and silane-based binders.

5. The electrode as claimed in any of claims 1 to 4, wherein the binder (BND) amount of the first electrode mixture layer (AML1) is greater than the binder (BND) amount of the second electrode mixture layer (AML2), and wherein the binder (BND) amount of the first electrode mixture layer (AML1) is greater than a binder (BND) amount of the third electrode mixture layer (AML3).

6. The electrode as claimed in any of claims 1 to 5, wherein the binder (BND) amount of the second electrode mixture layer (AML2) is greater than the binder (BND) amount of the third electrode mixture layer (AML3).

7. An electrode comprising:

  a current collector (COL); and
  a multiple active material layer (AML) on the current collector (COL),
  the multiple active material layer (AML) comprising:

    a first electrode mixture layer (AML1) on the current collector (COL);
    a second electrode mixture layer (AML2) on the first electrode mixture layer (AML1); and
    a third electrode mixture layer (AML3) on the second electrode mixture layer (AML2),
    each of the first, second, and third electrode mixture layers (AML3) comprising an electrode active material (ACT) and a binder (BND),
    a difference in binder (BND) ratio between the first and second electrode mixture layer (AML2)s being 0.1 to 0.6, and
    a difference in binder (BND) ratio between the second and third electrode mixture layers (AML3) being 0 to 0.4,
    wherein the electrode is for a rechargeable lithium battery (100).

8. The electrode as claimed in claim 7, wherein an amount of binder (BND) in the multiple active material layer (AML) has a gradient that decreases in a direction from the first electrode mixture layer (AML1) to the third electrode mixture layer (AML3).

9. The electrode as claimed in claim 7 or 8, wherein a binder (BND) amount of the first electrode mixture layer (AML1) is greater than a binder (BND) amount of the second electrode mixture layer (AML2), and the binder (BND) amount of the first electrode mixture layer (AML1) being 2 wt% to 8 wt%.

10. The electrode as claimed in any of claims 7 to 9, wherein a binder (BND) amount of the second electrode mixture layer (AML2) is less than a binder (BND) amount of the first electrode mixture layer (AML1) and greater than a binder (BND) amount of the third electrode mixture layer (AML3), the binder (BND) amount of the second electrode mixture layer (AML2) being 0.5 wt% to 4 wt%.

11. The electrode as claimed in any of claims 7 to 10, wherein a binder (BND) amount of the third electrode mixture layer (AML3) is less than a binder (BND) amount of the second electrode mixture layer (AML2), the binder (BND) amount of the third electrode mixture layer (AML3) being 0.1 wt% to 4 wt%.

12. The electrode as claimed in any of claims 7 to 11, wherein a first thickness (THK1) of the first electrode mixture layer (AML1) is less than a second thickness (THK2) of the second electrode mixture layer (AML2), the first thickness (THK1) being less than a third thickness (THK3) of the third electrode mixture layer (AML3).

13. The electrode as claimed in claim 12, wherein the first thickness (THK1), the second thickness (THK2), and the third thickness (THK3) have a ratio of a:1:1, wherein a is 0.3 to 0.7.

14. The electrode as claimed in any of claims 7 to 13, wherein the binder (BND) of each of the first, second, and third electrode mixture layers (AML3) comprises at least one selected from among polyvinylidene fluorides (PVDFs), styrene butadiene rubbers (SBR), mussel proteins, polyolefin-based binders, and silane-based binders.

15. A rechargeable lithium battery (100) comprising the electrode as claimed in any of claims 1 to 14.

# FIG. 1

ELL

Li$^+$

COL1 AML1    30    COL2 AML2
    10                 20

# FIG. 2

# FIG. 3

EP 4 583 184 A1

# FIG. 4

100

50

72

40

71

10

30

20

# FIG. 5

100

50

40

10
30
20

70

# FIG. 6

# FIG. 7

Top/middle/bottom binder distribution (before dry)

# FIG. 8

# FIG. 9

Adhesive Strength (gf/mm)

Europäisches
Patentamt

European
Patent Office

Office européen
des brevets

# EUROPEAN SEARCH REPORT

**Application Number**

EP 24 22 0081

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 678 491 A (ZHEJIANG EXTREME KRYPTON INTELLIGENT SCIENCE AND TECH LIMITED COMPANY) 28 June 2022 (2022-06-28) * claims 1, 4, 6, 10 * | 1-15 | INV. H01M4/13 H01M4/36 H01M4/62 |
| A | US 2023/420659 A1 (XU HANJIAO [CN] ET AL) 28 December 2023 (2023-12-28) * paragraphs [0099] - [0101]; example 1 * | 1-15 | H01M10/0525 H01M4/38 H01M4/587 |
| A | CN 111 095 645 A (MAXWELL LAB) 1 May 2020 (2020-05-01) * example 2 * | 1-15 | |

**TECHNICAL FIELDS SEARCHED (IPC)**

H01M

The present search report has been drawn up for all claims

| Place of search | Date of completion of the search | Examiner |
|---|---|---|
| Munich | 15 May 2025 | Martín Fernández, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

....................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 22 0081

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2025

| Patent document cited in search report | | Publication date | Patent family member(s) | | Publication date |
|---|---|---|---|---|---|
| CN 114678491 | A | 28-06-2022 | NONE | | |
| US 2023420659 | A1 | 28-12-2023 | CN | 115084427 A | 20-09-2022 |
| | | | US | 2023420659 A1 | 28-12-2023 |
| CN 111095645 | A | 01-05-2020 | CN | 111095645 A | 01-05-2020 |
| | | | EP | 3704756 A2 | 09-09-2020 |
| | | | JP | 7461877 B2 | 04-04-2024 |
| | | | JP | 7670768 B2 | 30-04-2025 |
| | | | JP | 2021501961 A | 21-01-2021 |
| | | | JP | 2023171777 A | 05-12-2023 |
| | | | KR | 20200083439 A | 08-07-2020 |
| | | | US | 2019139714 A1 | 09-05-2019 |
| | | | US | 2024258043 A1 | 01-08-2024 |
| | | | WO | 2019089696 A2 | 09-05-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240002659